# EUROPEAN PATENT SPECIFICATION

(11) **EP 1 308 043 B1**
(45) Date of publication and mention of the grant of the patent: **07.10.2009**
(21) Application number: 01961066.6
(22) Date of filing: 10.08.2001
(51) Int. Cl.: H04N 7/16, H04N 7/167

(54) **SYSTEM AND METHOD FOR PRE-ENCRYPTION OF TRANSMITTED CONTENT**
SYSTEM UND VERFAHREN ZUR VORVERSCHLÜSSELUNG VON ÜBERTRAGENEM INHALT
SYSTEME ET PROCEDE DE PRE-CRYPTAGE D'UN CONTENU TRANSMIS

(30) Priority: 11.08.2000 GB 0019879; 11.06.2001 GB 0114235; 18.06.2001 US 298958 P
(43) Date of publication of application: 07.05.2003
(73) Proprietor: NDS LIMITED, Staines, Middlesex TW18 4EX (GB)
(72) Inventor: DALLARD, Nigel Stephen, Eastleigh, Hampshire SO50 (GB); SMITH, Nigel, Berkshire RG10 0ay (GB); CHECHIK, David, Samuel, Jerusalem 95404 (IL)
(74) Representative: White, Duncan Rohan
(86) International application number: PCT/IL2001/000741
(87) International publication number: WO 2002/015578

(56) References cited:
- WO-A-00/54493
- WO-A-01/41442
- WO-A-99/12350
- DE-A- 19 957 466

## Description

### FIELD OF THE INVENTION

The present invention relates to a system and a method for pre-encryption of transmitted content.

### BACKGROUND OF THE INVENTION

Digital content can easily and efficiently be delivered through any type of suitable network, such as a cable network and/or a computer network. In particular, digital content can be efficiently delivered to individual users upon request, thereby enabling users to receive personalized content "on demand". Such personalization is particularly useful for digital content, such as video data and audio data, for display and/or playback through various types of media devices, in which the taste of the user is highly individualized. For example, users could select individual portions of music, television programs, movies and other types of entertainment, and receive these selections as digital content.

However, in order for digital content to be fully effectively delivered to users, a number of mechanisms need to be provided. First, if payment is required, then the digital content should be secure against theft, such that only authorized users can retrieve and display the digital content. Second, the user should also easily be able to effect payment where required, in order to encourage proper payment and usage. Third, neither of these mechanisms should interfere with the efficient delivery and display/playback of the digital content.

One attempt to provide such effective mechanisms is described in US Patent Nos. 5,282,249 and 5,481,609. The disclosed system enables a signal containing media content to be broadcast widely, yet only to be played back or otherwise displayed by authorized users. This signal could contain a television program for example. The signal is scrambled, such that the authorized users are able to descramble the signal and play back or otherwise display the media content only with the proper security device, such as a smart card for example. Thus, widely received media content is still protected from access by unauthorized users.

The scrambled television data streams described in US Patent Nos. 5,282,249 and 5,481,609 feature both scrambled data representing television signals and coded control messages, also known as ECMs. These ECMs contain, in a coded form, data necessary for generating a control word (CW) which may be used to descramble the scrambled data representing television signals.

While US Patent Nos. 5,282,249 and 5,481,609 describe an analog system, that is, a system in which analog television data streams are broadcast to television sets, it is appreciated that similar ECM methods may also be used for digital television data streams. Generally, the scrambling techniques used for scrambling analog television signals such as, for example, the well-known "cut-and-rotate" technique, are chosen for their particular applicability to analog signals. However, scrambling of digital television signals preferably employs other techniques, which are well-known in the art and which are more appropriate to digital signals. One example of such a technique is the application of the well-known DES algorithm to the digital television signals.

Methods of transmitting a scrambled digital signal, including ECMs, are described in the MPEG-2 standard, ISO/IEC 13818-1, 15 April 1996 and subsequent editions.

Another attempted solution to the problem of content protection is described in published European Patent Application No. EP 0858184 and corresponding US Patent 6,178,242, which disclose a digital recording protection system. The disclosed system enables the digital content to be sent in a scrambled format, such that the digital content cannot be read and/or displayed without a key. The key is obtained from a control message, which is only sent to authorized users. Preferably, the key is obtained from coded information contained within the Entitlement Control Message, or ECM, for generating a code word associated with the ECM. Thus, only authorized users are able to correctly read and/or display the digital content.

In addition, the system and method described in European Patent Application No. EP 0858184 enable the authorized user to record and playback or otherwise display the digital content, while preventing the user from producing and distributing multiple playable copies of the digital content to other, non-authorized users. Therefore, the authorized user is able to fully use and enjoy the digital content, while the content itself is still protected from unauthorized use.

As described in European Patent Application No. EP 0858184, and as shown in background art Figure 1 taken from this Application, such a system includes a media device **100,** such as a television set, for playing the digital content, such as a television program for example. Media device **100** is connected to an integrated receiver-decoder (IRD) **110,** for receiving and decoding the scrambled digital content. The system also features a removable security element **120,** such as a smart card for example, for providing control words for unscrambling, or otherwise rendering into a clear format, the scrambled digital content by TRD 110. In addition, the system features a digital VCR 130 for communicating with media device 100 and IRD 110. Digital VCR 130 is able to record the digital content for later playbackand/or display by media device 100.

IRD 110 receives scrambled digital content which features a plurality of ECMs, each of which is associated with, and is typically followed by, a scrambled digital data segment, containing the actual digital content. Each ECM includes coded information which can be used to generate a code word for unscrambling the associated scrambled digital data segment. Typically, removable security element 120 generates the code word. IRD 110 is then able to descramble the scrambled digital content, for example for being played by media device 100.

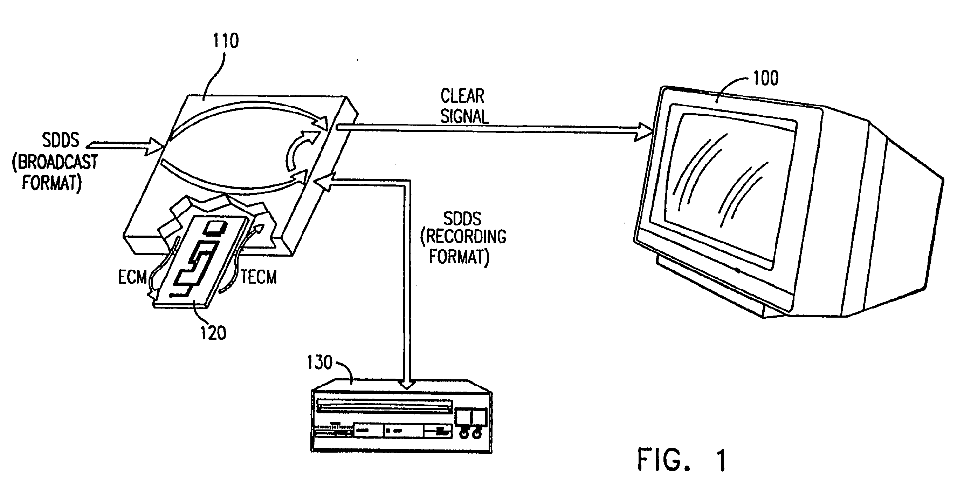

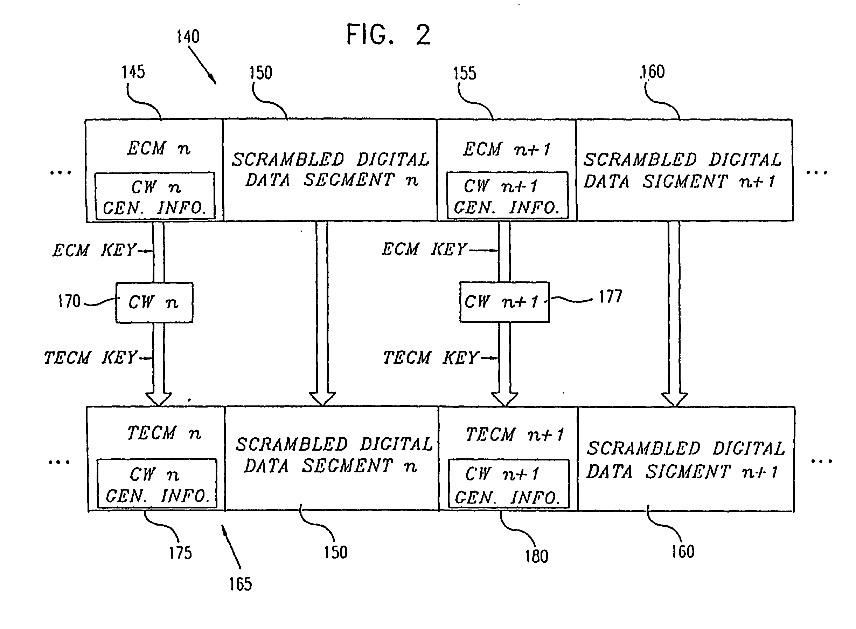

Background art Figure 2, also taken from European Patent Application No. EP0858184, is a flow diagram illustrating the production of the scrambled digital content. As shown, the scrambled digital content is produced as an SDDS (scrambled digital data stream) 140, featuring a plurality of ECMs such as an nth ECM 145, and a plurality of associated SDSEGs such as an nth SDSEG (scrambled digital data segment) 150 which is associated with nth ECM145. IRD 110 of Figure1, in cooperation with removable security element 120, is able to use SDDS 140 in order to form a recording SDDS 165. Recording SDDS 165 is produced with the addition of a TECM (transformed ECM) key, which is permanently associated with the system of Figure1, even if removable security element 120 is changed, replaced or exchanged, for example. This TECM key is used to make a pluralityof TECMs, shown as nth TECM 175, from the code words of the ECMs. Thus, a system which did not feature the correct TECM key could not descramble the recording SDDS 165 for playing back or otherwise displaying the digital content, while the authorized user is always able to play back or otherwise display the recorded digital content as long as the TECM key is available.

PCT Application No. WO00/01149 describes a system for data stream processing which enables encrypted data streams to be transmitted to the end user in advance of being displayed. The encrypted data streams are stored and are then only decrypted at the time of display or "play back".

PCT Application No. WO01/35669 describes a mechanism for processing a scrambled data stream, in which points within the stream are selected heuristically for recording the scrambled stream. The scrambled stream is only unscrambled, or rendered accessible for display, at the time of playback.

WO 99/12350 describes a method and system for transmitting motion picture cinematic information for viewing in movie theatres. The system comprises a first computer at a central site using a scrambling algorithm that utilizes a security key code to scramble a movie. The security key code is sent from the first computer to a second computer at a movie theatre where the same security key code is used in an inverse scrambling algorithm to descramble the movie.

### SUMMERY OF THE INVENTION

None of the background art solutions teaches or suggests a solution which combines the security of broadcasting from a central entity with the flexibility of distributed transmission entities. In addition, none of the background art solutions teaches or suggests a solution which provides greater flexibility for transmission of content while still maintaining the security of the digital content.

Therefore, there is an unmet need for, and it would be highly useful to have, a system and a method for distributed, secure transmission of encrypted digital content, which optionally provides for increased flexibility of transmission mechanisms, such as point-to-point and/or reception of the encrypted content in advance of playback or display. The background art requires control to be maintained at a central broadcasting entity, in order for the encryption keys and/or information for generating such keys to be correctly distributed. By contrast, the system and method of the present invention do not require any such transmission of the encrypted content by a central broadcasting entity, thereby providing greater flexibility for transmission of the content.

The present invention provides a method of transmitting encrypted media content to a client, comprising: storing at at least one transmission device: (a) said encrypted media content; and (b) information for generating control words for decryption of said encrypted media content, wherein said information for generating control words comprises: at least one entitlement control message, or at least one encrypted control word packet; responsive to receipt of a request from said client for said encrypted media content, personalising for the use of said client said information for generating control words for decryption only by said client of said encrypted media content; and transmitting said encrypted media content and said personalised information to said client.

Preferably a plurality of such transmission devices are used, for example in order to be able to place such a media transmission device in physical proximity to an end user client associated with a recipient, whether in terms of geographical proximity or proximity through a network. As described in greater detail below, use of a plurality of media transmission devices also optionally enables the media content to be transmitted flexibly, according to the request of the recipient through the end user: client.

The key which is used to decrypt the encrypted data is preferably itself generatable from information which is contained in a SECM (Server ECM, or Entitlement Control Message). The encrypted data may also optionally be accessed through the use of a control word. Optionally the key and the control word are the same entity, or alternatively the key could optionally be generatable from the control word. The control word in turn could optionally be generatable from control word generating information, which is more preferably contained in the SECM.

The SECM itself is preferably not sent to the end user client. Instead, upon request by the end user client, or optionally before such a request is sent, a PECM (Personalized ECM) is generated at least partially from the control word generating information contained in the SECM. The PECM therefore preferably contains information which is sufficient for the end user client to access the encrypted content. Optionally and more preferably, the control word generating information contained in the PECM is at least partially generated according to at least one characteristic of the end user client.

More preferably, only the particular end user client for which the PECM has been generated is then able to use the information contained in the PECM to access the encrypted data.

According to a preferred embodiment of the present invention, the encrypted data is divided into segments, according to a predetermined period of time for each segment or crypto-period, such that the SECM and hence the PECM are changed periodically. In order to accommodate "fast-forward" and "rewind" modes for viewing the content by the end user client, in which the segments of data are not played sequentially, optionally and preferably the media transmission server dynamically edits the data. As such editing cannot be performed if the data is encrypted, more preferably at least portions of the data are not encrypted.

Hereinafter, the terms "file", "portion" or "item", with regard to digital content, are used interchangeably and refer to any unit of data for such digital content, whether as a functional unit such as a packet for example, or as a conceptual unit such as a television program for example.

For the present invention, a software application could be written in substantially any suitable programming language, which could easily be selected by one of ordinary skill in the art. The programming language chosen should be compatible with the computational device according to which the software application is executed. Examples of suitable programming languages include, but are not limited to, C, C++, Java and Assembly.

In addition, the present invention could be implemented as software, firmware or hardware, or as a combination thereof. For any of these implementations, the functional steps performed by the method could be described as a plurality of instructions performed by a data processor. In addition, for the software implementation, the functional steps performed by the method could be described as a plurality of instructions performed by a computer software product.

Hereinafter, "Applied Cryptography" by Bruce Schneier, John Wiley 2nd ed. 1996, is refered to for the teachings regarding cryptography and techniques for implementation thereof.

This Application claims priority from US Provisional Application No 60/298,958, filed on 18 June 2001; United Kingdom Patent Application No. 0019879.6, filed on August 11, 2000; and United Kingdom Patent Application No. 0114235.5, filed on June 11 2001.

### BRIEF DESCRIPTION OF THE DRAWINGS

The invention is herein described, by way of example only, with reference to the accompanying drawings, wherein:
FIG. 1 is a schematic block diagram of a background art system;
FIG. 2 shows a flow diagram illustrating the production of the scrambled digital content according to the background art;
FIG. 3 is a schematic block diagram of an illustrative system according to the present invention;
FIG. 4 is a schematic block diagram of an illustrative embodiment of a distributed media transmission server according to the present invention; and
FIG. 5 is a flowchart of an exemplary method according to the present invention.

### DESCRIPTION OF THE PREFERRED EMBODIMENTS

The present invention is of a system and a method for the creation and transmission of "pre-encrypted" digital content, which is encrypted before being placed on a distributed media transmission server. Preferably a plurality of such servers are used, for example in order to be able to place such a media transmission server in physical proximity to the end user client, whether in terms of geographical proximity or proximity through the network. As described in greater detail below, use of a plurality of transmission servers also optionally enables the media content to be delivered more flexibly, according to the request of the end user through the end user client.

The key which is used to decrypt the encrypted data is preferably itself generatable from information which is contained in a SECM (Server ECM, or Entitlement Control Message). The encrypted data may also optionally be accessed through the use of a control word. Optionally the key and the control word are the same entity, or alternatively the key could optionally be generatable from the control word. The control word in turn could optionally be generatable from control word generating information, which is more preferably contained in the SECM.

The SECM itself is preferably not sent to the end user client. Instead, upon request by the end user client, or optionally before such a request is sent, a PECM (Personalized ECM) is generated at least partially from the control word generating information contained in the SECM. The PECM therefore preferably contains information which is sufficient for the end user client to access the encrypted content. Optionally and more preferably, the control word generating information contained in the PECM is at least partially generated according to at least one characteristic of the end user client.

Alternatively, the key and/or the control word could optionally be sent directly to the end user client for decrypting the encrypted content, although this implementation is less preferred for security reasons.

More preferably, only the particular end user client for which the PECM has been generated is then able to use the information contained in the PECM to access the encrypted data.

It should be noted that the key and/or control word for decrypting the encrypted content is not necessarily the same key and/or control word which is used for encrypting the content, as both asymmetric and symmetric encryption are suitable for the present invention.

According to a preferred embodiment of the present invention, the encrypted data is divided into segments, according to a predetermined period of time for each segment or crypto-period, such that the SECM and hence the PECM are changed periodically. In order to accommodate "fast-forward" and "rewind" modes for viewing the content by the end user client, in which the segments of data are not played sequentially, optionally and preferably the media transmission server dynamically edits the data. As such editing cannot be performed if the data is encrypted, more preferably at least portions of the data are not encrypted. According to a preferred embodiment of the present invention, at least one PECM containing control word generating information necessary to decrypt the first segment of the content to be displayed is sent to the end-user client in advance of said content. The other PECMs necessary to decrypt subsequent parts of the content are then preferably delivered in advance of the corresponding segments of the content. Alternatively, all the PECMs necessary to decrypt all of the content can be delivered before the actual content.

More preferably, as each segment or crypto-period is about to start, a marker packet or other unit of data is included in the content data stream to indicate which control word/key is required to decrypt the new segment of the content.

Systems for scrambling/encrypting digital content data are well known in the art, for example in US Patent Nos. 5,282,249 and 5,481,609, both to Cohen et al.. The disclosed system enables a signal containing media content, such as a television program for example, to be transmitted widely, yet only to be played back or otherwise displayed by authorized users.

Scrambled television data streams described in the Cohen et al patents comprise both scrambled data representing television signals and coded control messages, also known as ECMs (Entitlement Control Messages). The ECMs of Cohen et al comprise, in a coded form, data necessary for generating a control word (CW) which may be used to descramble the scrambled data representing television signals.

Data necessary for generating a control word is known in the background art to take many different forms and may include, in general, at least any of the following: a control word; an encrypted control word packet which is intended to be decrypted before use; and a seed to a generating function such as, for example, a one-way function which generates the control word upon input of the seed. Throughout the present specification and claims the term "control word generating information" is used to designate data necessary for generating a control word and/or key in any appropriate form, as described above.

The principles and operation of the present invention may be better understood with reference to the drawings and the accompanying description.

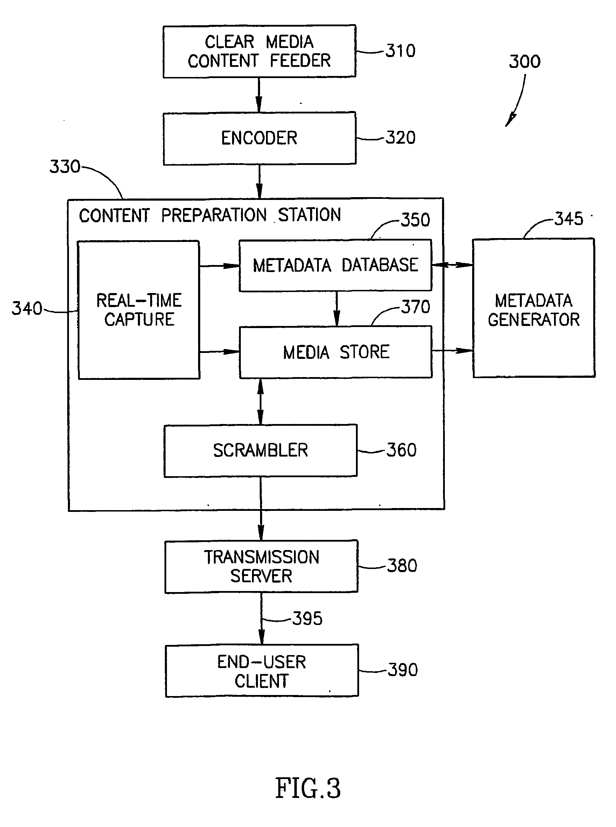

Referring now to the drawings, Figure 3 is a schematic block diagram of an illustrative system according to the present invention. Although the operation of the system is described with regard to television program content, it is understood that this is for the purposes of illustration only and is without any intention of being limiting in any way.

As shown, a system **300** according to the present invention features a clear media content feeder 310 for providing unencrypted, or "clear" digital media content. Such digital media content is optionally audio and/or video content, for example. For the purposes of explanation only and without wishing to be limiting, the digital content is assumed to at least include video content.

The unencrypted or "clear" video content is passed to an encoder 320, which compresses the digital media content. Preferably, encoder **320** also translates the content into a suitable transmission format, which optionally and more preferably is the MPEG-2 (Moving Pictures Expert Group 2) SPTS (Single Program Transport Stream) format (see for example *htip:*//*www.cselt.it*/*mpeg* for a description). This format is particularly preferred for transmission of a single television program or other media content in a transport stream at any given time. The MPEG-2 standard also defines compression methods for compressing the digital media content. Alternatively, other formats may optionally be used which are suitable for transport of a plurality of such programs in a single transport stream, although for the sake of clarity, the operation of the present invention is described with regard to the MPEG-2 SPTS format.

The formatted digital content is then sent to a content preparation station **330** according to the present invention. Content preparation station **330** preferably handles at least the initial encryption steps. Content preparation station **330** preferably features a real-time capture unit 340, for capturing the correctly formatted content. Optionally, real-time capture unit **340** analyzes the content for determining metadata related to the content, such as the start and end points of the television program, for example. Real-time capture unit **340** preferably automatically generates the metadata. A metadata generator **345** preferably permits the manual generation and/or editing of the metadata. This metadata is then preferably sent to a metadata database **350.**

The clear digital content is then sent to a scrambler **360,** preferably within content preparation station **330,** for being scrambled or encrypted. Scrambler **360** preferably follows the real-time MPEG-2 multiplexer format for scrambling the digital content, although as previously described, more preferably the MPEG-2 SPTS format is used. Scrambler **360** also preferably generates an encryption key for at least encrypting the scrambled or encrypted content, although alternatively such a key is generated by a separate key generating unit (not shown). It should be noted, as described above, that different keys and/or control words may optionally be used for encrypting and decrypting the content. Any type of suitable encryption algorithm may optionally be used, including but not limited to, triple-DES, DES and the industry standard DVB (Digital Video Broadcast consortium) scrambling algorithm. The encrypted content is then preferably stored in a media store **370.**

At some point, a decryption key needs to be created for at least decrypting the scrambled or encrypted content, although alternatively such a key is generated by a separate key generating unit (not shown). More preferably, this key and/or control word for at least decrypting the encrypted content is not directly generated by scrambler **360,** or at least such direct generation is not necessary. Instead, scrambler **360** more preferably generates one or more ECMs (Entitlement Control Messages), which contain the information which is necessary to generate the control word (control word generating information) and/or the control word itself Preferably, control word generating information is generated and placed into the ECM. The generation and transmission of such ECMs is previously described with regard to background art Figures 1 and 2.

Preferably, each ECM is encrypted and/or digitally signed to prevent an unauthorized user from tampering with the control word and/or control word generating information. Also preferably, the key/control word for decrypting and/or encrypting the digital content is produced from the control word generating information in the ECM through some type of one-way function. Examples of suitable one-way functions are well known in the art (see for example "Applied Cryptography" by Bruce Schneier, John Wiley 2nd ed. 1996).

More preferably, two different types ofECMs are used: PECMs (personal ECMs) and SECMs (server ECMs). SECMs are preferably used by content preparation station **330** to contain the general control word generating information. As described in greater detail below, more preferably, the SECMs are not sent to the end-user client (shown as end-user client **390).** Instead, PECMs, which are most preferably personalized for each end-user client, are generated from the control word generating information contained in the SECM and are sent to end-user client **390** for accessing the encrypted data. Thus, the data does not need to be separately encrypted for each end-user client, yet access is still controlled such that only the particular end-user client **390** for which the PECM has been generated is preferably able to access the encrypted data.

SECMs optionally and preferably include business rules which are associated with the scrambled content. Examples of such business rules include, but are not limited to, parental rating, embargo dates, regional blackouts and so forth.

The SECMs are preferably stored in a separate file, rather than being stored with the encrypted digital content itself. Such storage of the SECMs in a separate file is preferred in order to enable the digital content to be displayed "out of order", rather than in a simple linear sequence. For example, the user might optionally prefer to "fast forward" the displayed content to a later segment without displaying the intervening segments. As described in greater detail below, storing the SECMs in a separate file enables such content to be displayed in a flexible order.

The separate file also preferably includes information about the start and end of each "crypto-period", or portion of the encrypted content which may be accessed through a particular control word. The crypto-periods may optionally vary in size, but more preferably are sufficiently long that the next control word generating information can be received, and the decryption key generated, by end-user client 390 before the next crypto-period begins.

Once the digital media content has been encrypted, preferably the encrypted content, the metadata and the SECMs are loaded onto content preparation station **330** for being sent to a transmission server **380.** Transmission server 380 is preferably one of a plurality of such servers (not shown), which transmit the encrypted digital media content to an end-user client **390.** Transmission server **380** is optionally connected to end-user client **390** through a network **395** as shown, although alternatively, transmission server **380** is implemented with end-user client **390** at a single physical location. For the purposes of description only and without any intention of being limiting, transmission server **380** is assumed to be connected to end-user client **390** through network **395.**

A plurality of transmission servers **380** is preferred in order for end-user client **390** to receive encrypted data from a selected transmission server **380** which is more preferably able to deliver the highest quality of service. For example, such a transmission server **380** may optionally be in closest physical proximity to end-user client **390.** However, it should be noted that optionally, a transmission server **380** is located within end-user client **390,** although as previously discussed, for the purpose of the present description, transmission server **380** is assumed to be connected to end-user client **390** through network **395,** and therefore is assumed to be located at a physical distance from end-user client **390.**

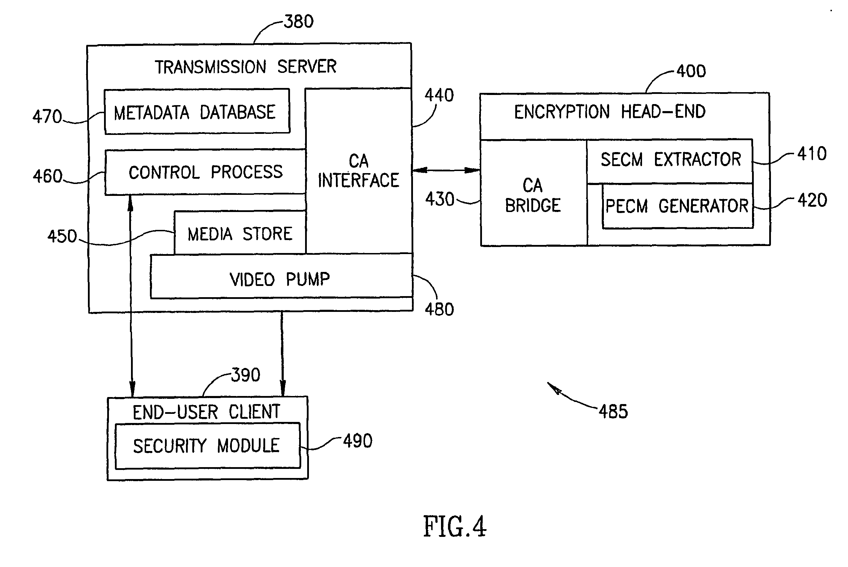

A preferred implementation for transmission server **380** is shown with regard to Figure 4. Transmission server **380** is preferably connected to an encryption head-end **400,** which receives a client identifier for end-user client **390** and a SECM (or at least the control word generating information contained in the SECM), and preferably uses this information to generate a PECM by a PECM generator **410.** PECM generator **410** generates the PECM such that end-user client 390 is able to decrypt the encrypted data from at least control word generating information contained in that PECM. As noted, alternatively the control word itself is contained in the PECM. More preferably, only the particular end-user client **390** for which the PECM has been generated is able to use at least the control word generating information contained in the PECM in order to access the encrypted data, since the PECM, or at least the control word generating information, is generated at least partially according to one characteristic of end-user client 390. Therefore, preferably the control word generating information which is transmitted, in the form of the PECM, is personalized to prevent access by unauthorized users.

At least the control word generating information is preferably extracted from the SECM by a SECM extractor **420.** This information is required to generate the PECM, or at least the control word generating information therein, by PECM generator **410.** More preferably, the control word generating information is modified by PECM generator **410** in order to generate the PECM. Alternatively, SECM extractor **420** may optionally use the control word generating information to create a control word, which would then be used to produce translated control word generating information.

In any case, SECM extractor **420** may also optionally decrypt the SECM as part of the extraction process, if the SECM is received by SECM extractor **420** as encrypted data.

Optionally and more preferably, encryption head-end **400** is connected to transmission server 380 through a CA (conditional access) bridge **430.**

PECM generator **410** preferably generates one or more PECMs, and more preferably generates one PECM for each SECM which is received. Each PECM contains control word generating information, translated from the SECM, which enables end-user client **390** to derive or generate the control word for allowing access to the encrypted content. Each PECM also most preferably contains at least a portion of the business rules from the SECM, but is encrypted such that preferably only the requesting end-user client **390** is able to decrypt the PECM. The algorithms for retrieving and/or generating the control word from each of SECM and PECM are preferably not identical. Each end user client **390** preferably has a separate algorithm and/or information which is required for generating the control word from the appropriate PECM.

Encryption of the PECM preferably incorporates either the client identifier, or information which is available to encryption head-end **400,** for example through a look-up table, which is retrieved according to the client identifier. Encryption head-end **400** then returns each PECM to transmission server **380,** preferably through CA bridge **430.**

Transmission server **380** preferably features a CA (conditional access) interface **440** for retrieving SECMs from the (preferably separate) file in a media store **450.** Media store **450** also preferably stores the encrypted content which is received from the content preparation station (not shown; see Figure 3). CA interface **440** preferably receives instructions for determining which content to retrieve from a control process **460,** which preferably receives and processes the request for content from end-user client **390.** Control process **460** optionally and more preferably authenticates end-user client **390,** for example by using an MD5 digest. In addition, control process **460** more preferably decomposes the request for content into the request for a sequence of segments from one or more physical files, most preferably according to meta-data information which is stored in a meta-data database **470.**

Once the PECM has been generated, and optionally inserted into the transport stream or otherwise delivered to end-user client **390,** the actual encrypted digital content is preferably streamed to end-user client **390** by a video pump **480.** Video pump **480** is therefore optionally implemented according to any suitable delivery mechanism. Also optionally, video pump **480** inserts the PECM(s) into the transport stream as required.

Transmission server **380** and encryption head-end **400** may optionally be termed a transmission device **485,** whether physically located together or separated.

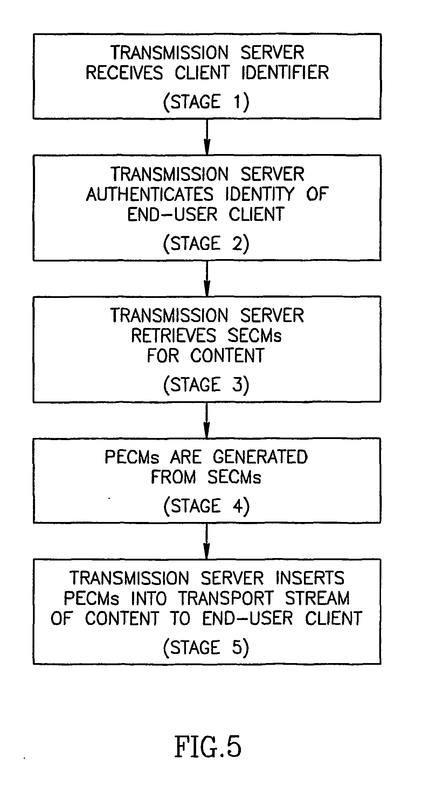

A preferred operation of the present invention with regard to Figure 4 is preferably performed as follows, as also described with regard to the flowchart of Figure 5. In stage 1, transmission server **380** preferably receives the client identifier from end-user client **390** when the user wishes to receive encrypted content. In stage 2, transmission server **380** then preferably authenticates the identity of end-user client **390** and also determines whether end-user client 390 (and hence the user) is entitled to receive the requested content.

If end-user client **390** is entitled to receive the content, then in stage 3, transmission server **380** retrieves the one or more SECMs which are associated with the content, and sends them with the identifier for end-user client **390** to encryption head-end **400.** The SECMs may optionally be sent to encryption head-end **400** as a batch process at the start of the content transmission process, or alternatively may be sent individually to encryption head-end **400** as required. Encryption head-end **400** then generates one or more PECMs as previously described, in stage 4.

Transmission server **380** preferably inserts the PECMs into the transport stream of the digital media content as it is being streamed to end-user client **390** in stage 5, or otherwise delivers the PECMs to end-user client **390.** The timing of the transmission is preferably determined such that end-user client **390** has sufficient time to receive and decrypt the PECM before the control word derived from the control word generating information in the PECM is required for decrypting the transmitted encrypted digital media content. Transmission server **380** transmits the requested digital content to end-user client **390.**

According to preferred embodiments of the present invention, the timing of delivery of the PECM(s) to end-user client **390** is at least partially determined by the mode of operation of end-user client **390,** such that transmission server **380** preferably receives information about this mode of operation from end-user client **390.** Each PECM is preferably delivered to end-user client **390** a defined period of time before display of the relevant encrypted portion of the transport stream is performed. For example, such a defined period of time is optionally 0.5 seconds before the time of display.

Preferably, end-user client **390** features an additional operational mode, in which the user is able to "fast-forward" or skip at least a portion of the digital content, such that the digital content is not displayed according to a strictly linear sequence. This operational mode also requires the appropriate content to be transmitted by transmission server **380,** such that at least a portion of the transport stream is skipped. However, such a mode of transmission is complicated both by the necessity to deliver the PECM(s) at the appropriate time and also by the requirements of transmitting streaming video data which has been compressed according to MPEG-2, according to the preferred embodiment of the present invention.

The MPEG-2 standard defines a mode of compression which partially relies upon redundancy within and between frames of the video data to reduce or remove unnecessary visual data. The removed data is chosen in order to minimize any degradation of the visual quality by exploiting properties of the human visual system. In particular, spatial encoding and temporal encoding are used to reduce unnecessary data. Spatial encoding reduces or removes spatial redundancy between different portions of the same picture or frame of the video data, by encoding a reduced number of pixels which are similar or identical, and then using this reduced number to fill the relevant areas of the picture.

Temporal encoding reduces or removes temporal redundancy between different pictures or frames of the video data, by using motion estimation and inter-frame prediction. For example, inter-frame prediction starts with one complete frame, or I-frame, as a basis from which other frames are then constructed from reduced transmitted data. Predicted frames, or P-frames, are predicted from either a previous I-frame or a previous P-frame. B-frames are another type of predicted frames, but are predicted bi-directionally from previous and/or subsequent P-frames or I-frames. In order to avoid or reduce propagation of error and/or the effect of dropped or missed frames, the frames are divided into Groups of Pictures (GOPs), which begin and end with a complete I-frame.

During the "fast-forwarding" procedure, the visual data, or frames, are delivered out of the strictly linear sequence, which clearly could be problematic for this type of encoding and compression. The present invention overcomes any potential problems by preferably sending only a portion of the visual data during the "fast-forwarding" procedure. More preferably, only the I-frames are sent, which provides sufficient visual quality without the difficulty of sufficiently rapid decoding of the visual data.

Transmission server **380** more preferably edits the transmitted stream of data in order for the essential portions to be transmitted and timely displayed during the "fast-forwarding" procedure. In order for such editing to occur sufficiently rapidly, according to a preferred embodiment of the present invention, at least a portion of the data is not encrypted. This portion more preferably includes the transport packets containing the start or end of any video PES packet and/or I-frame packet, for editing to be sufficiently rapid.

In order for end-user client **390** to be able to decrypt the portions of the visual data sufficiently rapidly, end-user client **390** needs to receive the PECM a sufficient period of time before the corresponding visual data is to be displayed. Transmission server **380** preferably calculates the position within the transport stream according to the relevant time of display by end-user client **390,** and then sends each PECM a sufficient period of time before this display is required. This period of time preferably also includes time for generating the control word from the PECM and also decrypting the encrypted digital media content. Alternatively, as previously described, all required PECM(s) could optionally be sent at once, before the encrypted content is transmitted or at the start of transmission.

It should be noted that a similar procedure could also optionally be followed for "rewinding" or showing a previous portion of content, again out of sequence. In this case, selected parts of the visual stream are streamed to end-user client **390** but in reverse order. Again, the PECM(s) need to be transmitted a sufficient period of time before the content needs to be displayed.

Generally, the display of the content in a non-linear order according to the present invention relies upon some marker or feature within the content, for determining which alterations to the content are necessary for display out of sequence. For example, with regard to MPEG-2, preferably only the I-frames are transmitted, such that the content is edited for transmission of this type of data only. Other types of markers or features may also optionally be used. In this respect, the present invention may be distinguished from background art references such as PCT Application No. WO 01/35669, which rely upon heuristics for determining which content is to be displayed out of the sequential order.

These two implementations for displaying content out of a strictly linear sequence or order also preferably feature the separate storage of a SECM in a separate file, rather than storing this content with the file. As previously described, separate storage of the SECM enables the content to be more easily adjusted for display out of the strictly linear sequence or order.

According to a preferred but optional implementation of the present invention, end-user client **390** optionally and more preferably features a renewable, removable security module **490,** such as a smartcard for example, for decrypting or otherwise unscrambling content which the user has requested, as previously described for background art Figures 1 and 2. Security module **490** is itself preferably secured, such that information contained within this module is protected from unauthorized access. Security module **490** receives and/or generates the necessary control word, and is then able to unscramble the received content for play back or other display. Most preferably, the operation of security module **490** is transparent or substantially transparent to the end user.

While the invention has been described with respect to a limited number of embodiments, it will be appreciated that many variations, modifications and other applications of the invention may be made.

## Claims

1. A method of transmitting encrypted media content to a client (390), comprising:
storing at at least one transmission device (485): (a) said encrypted media content; and (b) information for generating control words for decryption of said encrypted media content, wherein said information for generating control words comprises: at least one entitlement control message, or at least one encrypted control word packet;
responsive to receipt of a request from said client (390) for said encrypted media content, personalising for the use of said client (390) said information to provide personalised information for generating control words for decryption only by said client (390) of said encrypted media content; and
transmitting said encrypted media content and said personalised information to said client (390).

2. The method of claim 1, said method further comprising:
responsive to said request, selecting a selected transmission device from said at least one transmission device for transmitting to said client (390) said encrypted media content and said personalised information, wherein said selected transmission device is selected according to at least one characteristic of said selected transmission device.

3. The method of claim 1 or 2, wherein at least said personalised information is transmitted separately from said encrypted media content by said transmission device (485).

4. The method of any preceding claim, wherein said personalised information is at least partially generated according to at least one characteristic of said client (390).

5. The method of claim 1 or 2, wherein at least said personalised information is transmitted with said encrypted media content by said transmission device (485).

6. The method of any of claims 1-5, wherein said encrypted media content is divided into a plurality of segments, each segment being encrypted with a different key.

7. The method of claim 6, wherein said plurality of segments form a linear sequence, and wherein at least one of said segments is displayed out of said linear sequence, such that at least personalised information for at least one of said segments being displayed out of said linear sequence is transmitted by said transmission device (485) such that said at least one segment is decrypted in time for display.

8. The method of claim 7, wherein at least a portion of said at least one of said segments is edited by said transmission device (485).

9. The method of claim 8, wherein said portion is selected according to at least one marker in said segment

10. The method of claim 9, wherein said at least one marker is an I-frame for digital media content formatted according to MPEG-2.

11. The method of any of claims 8-10, wherein said portion is unencrypted at said transmission device (485) before being edited.

12. The method of any of claims 1-11, wherein said transmission device (485) further comprises an encryption head-end (400), and said encryption head-end (400) personalises at least said information to form said personalised information.

13. The method of claim 12, wherein said transmission device (485) further comprises a transmission server (380), and said transmission server (380) transmits said encrypted media content.

14. The method of claim 13, wherein said transmission server (380) further transmits said personalised information.

15. The method of claim 14, wherein said encrypted media content is transmitted in a transmission stream, and said personalised information is inserted into said transmission stream.

16. The method of claim 14, wherein said personalised information is transmitted separately from said encrypted content.

17. The method of any of claims 1-16, wherein said transmission device (485) does not decrypt said encrypted media content.

18. The method of any preceding claim, wherein said client (390) selects a selected transmission device from said at least one transmission device,

19. The method of any of claims 2 to 18, wherein said selected transmission device is selected according to a quality of service deliverable to said client (390).

20. A transmission device (485) for transmitting encrypted media content, comprising:
a store (450) for storing: (a) said encrypted media content; and (b) information for generating control words for decryption of said encrypted media content, wherein said information for generating control words comprises: at least one entitlement control message, or at least one encrypted control word packet;
personalisation means (400), responsive to receipt of a request from said client (390) for said encrypted media content, for personalising for the use of said client (390) said information to provide personalised information for generating control words for decryption only by said client (390) of said encrypted media content; and
transmission means (380) for transmitting said encrypted media content and said personalised information to said client (390).

21. The transmission device (485) of claim 20, wherein said personalised information is generated at least partially according to a characteristic of said client (390).

22. The transmission device (485) of claims 20 or 21, wherein said transmission means (380) further comprises means for transmitting (480) said encrypted media content and said personalised information simultaneously to said client (390).

23. The transmission device (485) of claims 20 or 21, wherein said transmission means (380) further comprises means for transmitting (480) said encrypted media content and said personalised information separately to said client (390).

24. The transmission device (485) of any of claims 20-23, wherein said personalisation means (400) further comprises a decryptor for receiving encrypted information for generating control words and for decrypting said encrypted information for generating control words.

## Patentansprüche

1. Ein Verfahren zum Übertragen von verschlüsselten Medieninhalten an einen Client (390), das Folgendes beinhaltet:
Speichern auf mindestens einer Übertragungsvorrichtung (485) von Folgendem: (a) den verschlüsselten Medieninhalten und (b) Informationen zum Erzeugen von Steuerwörtern zur Entschlüsselung der verschlüsselten Medieninhalte, wobei die Informationen zum Erzeugen der Steuerwörter Folgendes beinhalten: mindestens eine Berechtigungssteuernachricht oder mindestens ein verschlüsseltes Steuerwortpaket;
als Reaktion auf den Erhalt einer Anfrage von dem Client (390) nach den verschlüsselten Medieninhalten, Personalisieren der Informationen zur Verwendung durch den Client (390), um personalisierte Informationen bereitzustellen, um Steuerwörter zur Entschlüsselung der verschlüsselten Medieninhalte lediglich durch den Client (390) zu erzeugen; und
Übertragen der verschlüsselten Medieninhalte und der personalisierten Informationen an den Client (390).

2. Verfahren gemäß Anspruch 1, wobei das Verfahren ferner Folgendes beinhaltet:
als Reaktion auf die Anfrage, Auswählen einer ausgewählten Übertragungsvorrichtung aus der mindestens einen Übertragungsvorrichtung zum Übertragen der verschlüsselten Medieninhalte und der personalisierten Informationen an den Client (390), wobei die ausgewählte Übertragungsvorrichtung gemäß mindestens einer Eigenschaft der ausgewählten Übertragungsvorrichtung ausgewählt wird.

3. Verfahren gemäß Anspruch 1 oder 2, wobei mindestens die personalisierten Informationen getrennt von den verschlüsselten Medieninhalten von der Übertragungsvorrichtung (485) übertragen werden.

4. Verfahren gemäß einem der vorhergehenden Ansprüche, wobei die personalisierten Informationen mindestens teilweise gemäß mindestens einer Eigenschaft des Client (390) erzeugt werden.

5. Verfahren gemäß Anspruch 1 oder 2, wobei mindestens die personalisierten Informationen mit den verschlüsselten Medieninhalten von der Übertragungsvorrichtung (485) übertragen werden.

6. Verfahren gemäß einem der Ansprüche 1-5, wobei die verschlüsselten Medieninhalte in eine Vielzahl von Segmenten unterteilt werden, wobei jedes Segment mit einem anderen Schlüssel verschlüsselt wird.

7. Verfahren gemäß Anspruch 6, wobei die Vielzahl von Segmenten eine lineare Sequenz bildet, und wobei mindestens eines der Segmente aus der linearen Sequenz heraus angezeigt wird, so dass mindestens personalisierte Informationen für mindestens eines der Segmente, das aus der linearen Sequenz heraus angezeigt wird, von der Übertragungsvorrichtung (485) übertragen werden, so dass das mindestens eine Segment rechtzeitig zur Anzeige entschlüsselt wird.

8. Verfahren gemäß Anspruch 7, wobei mindestens ein Abschnitt des mindestens einen der Segmente von der Übertragungsvorrichtung (485) editiert wird.

9. Verfahren gemäß Anspruch 8, wobei der Abschnitt gemäß mindestens einer Markierung in dem Segment ausgewählt wird.

10. Verfahren gemäß Anspruch 9, wobei die mindestens eine Markierung ein I-Bild für gemäß MPEG-2 formatierte Digitalmedieninhalte ist.

11. Verfahren gemäß einem der Ansprüche 8-10, wobei für den Abschnitt vor dem Editieren an der Übertragungsvorrichtung (485) die Verschlüsselung entfernt wird.

12. Verfahren gemäß einem der Ansprüche 1-11, wobei die Übertragungsvorrichtung (485) ferner eine Verschlüsselungskopfstelle (400) beinhaltet und die Verschlüsselungskopfstelle (400) mindestens die Informationen personalisiert, um die personalisierten Informationen zu bilden.

13. Verfahren gemäß Anspruch 12, wobei die Übertragungsvorrichtung (485) ferner einen Übertragungsserver (380) beinhaltet und der Übertragungsserver (380) die verschlüsselten Medieninhalte überträgt.

14. Verfahren gemäß Anspruch 13, wobei der Übertragungsserver (380) ferner die personalisierten Informationen überträgt.

15. Verfahren gemäß Anspruch 14, wobei die verschlüsselten Medieninhalte in einem Übertragungsstrom übertragen werden und die personalisierten Informationen in den Übertragungsstrom eingefügt werden.

16. Verfahren gemäß Anspruch 14, wobei die personalisierten Informationen getrennt von den verschlüsselten Inhalten übertragen werden.

17. Verfahren gemäß einem der Ansprüche 1-16, wobei die Übertragungsvorrichtung (485) die verschlüsselten Medieninhalte nicht entschlüsselt.

18. Verfahren gemäß einem der vorhergehenden Ansprüche, wobei der Client (390) eine ausgewählte Übertragungsvorrichtung aus der mindestens einen Übertragungsvorrichtung auswählt.

19. Verfahren gemäß einem der Ansprüche 2 bis 18, wobei die ausgewählte Übertragungsvorrichtung gemäß einer dem Client (390) lieferbare Dienstgüte ausgewählt wird.

20. Eine Übertragungsvorrichtung (485) zum Übertragen von verschlüsselten Medieninhalten, die Folgendes beinhaltet:
einen Speicher (450) zum Speichern von Folgendem: (a) den verschlüsselten Medieninhalten und (b) Informationen zum Erzeugen von Steuerwörtern zur Entschlüsselung der verschlüsselten Medieninhalte, wobei die Informationen zum Erzeugen der Steuerwörter Folgendes beinhalten: mindestens eine Berechtigungssteuernachricht oder mindestens ein verschlüsseltes Steuerwortpaket;
ein Personalisierungsmittel (400), um als Reaktion auf den Erhalt einer Anfrage von dem Client (390) nach den verschlüsselten Medieninhalten die Informationen zur Verwendung durch den Client (390) zu personalisieren, um personalisierte Informationen bereitzustellen, um Steuerwörter zur Entschlüsselung der verschlüsselten Medieninhalte lediglich durch den Client (390) zu erzeugen; und
ein Übertragungsmittel (380) zum Übertragen der verschlüsselten Medieninhalte und der personalisierten Informationen an den Client (390).

21. Übertragungsvorrichtung (485) gemäß Anspruch 20, wobei die personalisierten Informationen mindestens teilweise gemäß einer Eigenschaft des Client (390) erzeugt werden.

22. Übertragungsvorrichtung (485) gemäß den Ansprüchen 20 oder 21, wobei das Übertragungsmittel (380) ferner ein Mittel zum simultanen Übertragen (480) der verschlüsselten Medieninhalte und der personalisierten Informationen an den Client (390) beinhaltet.

23. Übertragungsvorrichtung (485) gemäß den Ansprüchen 20 oder 21, wobei das Übertragungsmittel (380) ferner ein Mittel zum getrennten Übertragen (480) der verschlüsselten Medieninhalte und der personalisierten Informationen an den Client (390) beinhaltet.

24. Übertragungsvorrichtung (485) gemäß einem der Ansprüche 20-23, wobei das Personalisierungsmittel (400) ferner einen Entschlüsseler zum Erhalten von verschlüsselten Informationen zum Erzeugen von Steuerwörtern und zum Entschlüsseln der verschlüsselten Informationen zum Erzeugen von Steuerwörtern beinhaltet.

## Revendications

1. Un procédé pour transmettre un contenu média crypté à un client (390), comprenant :
stocker au niveau d'au moins un dispositif de transmission (485) : (a) ledit contenu média crypté ; et (b) des informations destinées à générer des mots de contrôle pour le décryptage dudit contenu média crypté, dans lequel lesdites informations destinées à générer des mots de contrôle comprennent : au moins un message de contrôle de droit d'accès, ou au moins un paquet de mots de contrôle crypté ;
en réponse à une demande de consultation dudit contenu média crypté reçue dudit client (390), personnaliser, pour l'utilisation dudit client (390), lesdites informations afin de fournir des informations personnalisées destinées à générer des mots de contrôle pour un décryptage uniquement par ledit client (390) dudit contenu média crypté ; et
transmettre ledit contenu média crypté et lesdites informations personnalisées audit client (390).

2. Le procédé de la revendication 1, ledit procédé comprenant en outre :
en réponse à ladite demande, sélectionner un dispositif de transmission sélectionné parmi ledit au moins un dispositif de transmission pour transmettre audit client (390) ledit contenu média crypté et lesdites informations personnalisées, dans lequel ledit dispositif de transmission sélectionné est sélectionné selon au moins une caractéristique dudit dispositif de transmission sélectionné.

3. Le procédé de la revendication 1 ou la revendication 2, dans lequel au moins lesdites informations personnalisées sont transmises séparément dudit contenu média crypté par ledit dispositif de transmission (485).

4. Le procédé de n'importe quelle revendication précédente, dans lequel lesdites informations personnalisées sont au moins en partie générées selon au moins une caractéristique dudit client (390).

5. Le procédé de la revendication 1 ou la revendication 2, dans lequel au moins lesdites informations personnalisées sont transmises avec ledit contenu média crypté par ledit dispositif de transmission (485).

6. Le procédé de n'importe lesquelles des revendications 1 à 5, dans lequel ledit contenu média crypté est divisé en une pluralité de segments, chaque segment étant crypté avec une clef différente.

7. Le procédé de la revendication 6, dans lequel ladite pluralité de segments forme une séquence linéaire, et dans lequel au moins un desdits segments est affiché hors de ladite séquence linéaire, de telle sorte qu'au moins des informations personnalisées pour au moins l'un desdits segments affiché hors de ladite séquence linéaire sont transmises par ledit dispositif de transmission (485) de telle sorte que ledit au moins un segment soit décrypté à temps pour l'affichage.

8. Le procédé de la revendication 7, dans lequel au moins une portion dudit au moins un desdits segments est éditée par ledit dispositif de transmission (485).

9. Le procédé de la revendication 8, dans lequel ladite portion est sélectionnée selon au moins un marqueur dans ledit segment.

10. Le procédé de la revendication 9, dans lequel ledit au moins un marqueur est une image I pour un contenu média numérique formaté selon MPEG-2.

11. Le procédé de n'importe lesquelles des revendications 8 à 10, dans lequel ladite portion est non cryptée au niveau dudit dispositif de transmission (485) avant d'être éditée.

12. Le procédé de n'importe lesquelles des revendications 1 à 11, dans lequel ledit dispositif de transmission (485) comprend en outre une tête de réseau de cryptage (400), et ladite tête de réseau de cryptage (400) personnalise au moins lesdites informations pour former lesdites informations personnalisées.

13. Le procédé de la revendication 12, dans lequel ledit dispositif de transmission (485) comprend en outre un serveur de transmission (380), et ledit serveur de transmission (380) transmet ledit contenu média crypté.

14. Le procédé de la revendication 13, dans lequel ledit serveur de transmission (380) transmet en outre lesdites informations personnalisées.

15. Le procédé de la revendication 14, dans lequel ledit contenu média crypté est transmis dans un flux de transmission, et lesdites informations personnalisées sont insérées dans ledit flux de transmission.

16. Le procédé de la revendication 14, dans lequel lesdites informations personnalisées sont transmises séparément dudit contenu crypté.

17. Le procédé de n'importe lesquelles des revendications 1 à 16, dans lequel ledit dispositif de transmission (485) ne décrypte pas ledit contenu média crypté.

18. Le procédé de n'importe quelle revendication précédente, dans lequel ledit client (390) sélectionne un dispositif de transmission sélectionné parmi ledit au moins un dispositif de transmission.

19. Le procédé de n'importe lesquelles des revendications 2 à 18, dans lequel ledit dispositif de transmission sélectionné est sélectionné selon une qualité de service pouvant être délivrée audit client (390).

20. Un dispositif de transmission (485) destiné à transmettre un contenu média crypté, comprenant :
une unité de mémoire (450) destinée à stocker : (a) ledit contenu média crypté ; et (b) des informations destinées à générer des mots de contrôle pour le décryptage dudit contenu média crypté, dans lequel lesdites informations destinées à générer des mots de contrôle comprennent : au moins un message de contrôle de droit d'accès, ou au moins un paquet de mots de contrôle crypté ;
un moyen de personnalisation (400), en réponse à une demande dudit contenu média crypté reçue dudit client (390), destiné à personnaliser, pour l'utilisation dudit client (390), lesdites informations afin de fournir des informations personnalisées destinées à générer des mots de contrôle pour un décryptage uniquement par ledit client (390) dudit contenu média crypté ; et
un moyen de transmission (380) destiné à transmettre ledit contenu média crypté et lesdites informations personnalisées audit client (390).

21. Le dispositif de transmission (485) de la revendication 20, dans lequel lesdites informations personnalisées sont générées au moins en partie selon une caractéristique dudit client (390).

22. Le dispositif de transmission (485) des revendications 20 ou 21, dans lequel ledit moyen de transmission (380) comprend en outre un moyen destiné à transmettre (480) ledit contenu média crypté et lesdites informations personnalisées simultanément audit client (390).

23. Le dispositif de transmission (485) des revendications 20 ou 21, dans lequel ledit moyen de transmission (380) comprend en outre un moyen destiné à transmettre (480) ledit contenu média crypté et lesdites informations personnalisées séparément audit client (390).

24. Le dispositif de transmission (485) de n'importe lesquelles des revendications 20 à 23, dans lequel ledit moyen de personnalisation (400) comprend en outre un décrypteur destiné à recevoir des informations cryptées pour générer des mots de contrôle et à décrypter lesdites informations cryptées pour générer des mots de contrôle.
